# EUROPÄISCHE PATENTSCHRIFT

(11) **EP 1 604 772 B1**
(45) Veröffentlichungstag und Bekanntmachung des Hinweises auf die Patenterteilung: **17.09.2008**
(21) Anmeldenummer: 05010913.1
(22) Anmeldetag: 19.05.2005
(51) Int. Cl.: B23K 26/22, H01K 1/20, H01K 3/06

(54) **Verfahren zum Verschweissen einer Metallfolie mit einem zylindrischen Metallstift**
Process for welding a metal foil to a cylindrical metal pin
Procédé pour souder une feuille métallique à une tige métallique cylindrique

(30) Priorität: 08.06.2004 DE 102004027806
(43) Veröffentlichungstag der Anmeldung: 14.12.2005
(73) Patentinhaber: Patent-Treuhand-Gesellschaft für elektrische Glühlampen mbH, 81543 München (DE)
(72) Erfinder: Rittner, Roland, 89542 Herbrechtingen (DE)

(56) Entgegenhaltungen:
- DE-A1- 19 538 497
- DE-A1- 19 612 169
- US-A- 5 659 656
- US-A- 5 777 435

## Beschreibung

Die Erfindung betrifft ein Verfahren zum Verschweißen einer Metallfolie mit einem zylindrischen Metallstift, die zur Verwendung als Stromzuführungen in Lampen vorgesehen sind.

### I. Stand der Technik

In der Offenlegungsschrift EP 1 066 912 A1 ist das Verschweißen einer Molybdänfolie mit einem zylindrischen Wolframstift mittels einer Widerstandsschweißung beschrieben. Dieses Verfahren hat den Nachteil, dass die Schweißelektroden aufgrund ihres Verschleißes in regelmäßigen Abständen ausgewechselt werden müssen und dadurch eine Unterbrechung des Fertigungsprozesses verursacht wird.

### II. Darstellung der Erfindung

Es ist die Aufgabe der Erfindung, ein verbessertes Verfahren zum Verschweißen einer Metallfolie mit einem zylindrischen Metallstift anzugeben, das die oben genannten Nachteile vermeidet.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Das erfindungsgemäße Verfahren zum Verschweißen einer Metallfolie mit einem Metallstift, die zur Verwendung als Stromzuführungen in Lampen vorgesehen sind, wobei die Metallfolie zur Ausführung des Schweißprozesses an den Metallstift angedrückt wird, zeichnet sich dadurch aus, dass der an dem Metallstift anliegende Bereich der Metallfolie mittels eines Lasers an mehreren Orten punktuell erhitzt und geschmolzen wird, so dass nach dem Erkalten der Schmelze die Metallfolie und der Metallstift in der Umgebung dieser Orte miteinander verbunden sind.

Bei Verwendung des erfindungsgemäßen Schweißverfahrens werden keine Schweißelektroden wie bei dem Verfahren gemäß des Standes der Technik benötigt. Dementsprechend tritt auch keine Unterbrechung des Fertigungsprozesses durch ein Auswechseln von verschlissenen Schweißelektroden auf.

Das erfindungsgemäße Verfahren eignet sich vorteilhaft zum Verschweißen einer dünnen Metallfolie mit einer Dicke von kleiner oder gleich 150 µm wie zum Beispiel einer Molybdänfolie, die als gasdichte Stromdurchführung in Lampengefäßen aus Quarzglas üblicherweise verwendet wird, mit einem Metallstift, insbesondere einer zylindrischen Lampenelektrode aus Wolfram oder einem Stromzuführungsdraht aus Molybdän oder dem Endabschnitt eines Wolframglühfadens.

Um zu vermeiden, dass sich die Schmelze aufgrund der Oberflächenspannung zusammenzieht und kugelartige Verdickungen bildet, die keine flächenhafte Verbindung mit dem Metallstift zulassen würden, wird der Laser gepulst betrieben und die Dauer der Laserimpulse auf einen Wert kleiner oder gleich 1,0 Millisekunden eingestellt. Der Durchmesser des Laserstrahls ist vorteilhaft auf die Breite bzw. Querabmessung des Kontaktbereiches von Metallfolie und Metallstift abgestimmt, um zu gewährleisten, dass die vom Laser erzeugte Wärme zu dem Material des Metallstifts weitergeleitet werden kann, so dass sich in der Metallfolie keine Löcher aufgrund von Überhitzung bilden können. Zum Verschweißen der in der Lampentechnik gebräuchlichen Metallstifte wird daher vorteilhaft ein Laser mit einem Strahldurchmesser von kleiner oder gleich 0,5 Millimeter verwendet. Als vorteilhaft hat es sich ferner erwiesen, den Metallstift vor dem Schweißprozess abzuflachen und die durch das Abflachen entstandene Oberfläche des Metallstifts mit der Metallfolie in Kontakt zu bringen. Durch das Abflachen des Metallstifts wird die Auflagefläche zwischen der Metallfolie und dem Metallstift vergrößert. Dementsprechend können die beiden Metallteile durch eine größere Anzahl von Schweißpunkten miteinander verbunden werden und das Ausrichten des Lasers wird vereinfacht. Um über die gesamte Kontaktfläche von Metallfolie und Metallstift einen ausreichenden Andruck, unter Vermeidung von Zwischenräumen zu gewährleisten und außerdem die gesamte Kontaktfläche für den Schweißprozess zugänglich zu haben, wird der Andruck vorteilhaft mittels eines kontinuierlichen Gasstroms generiert, der während des Schweißverfahrens gegen die Metallfolie gerichtet ist, oder aber durch eine geeignete mechanische Andrückvorrichtung erzeugt.

### III. Beschreibung des bevorzugten Ausführungsbeispiels

Nachstehend wird die Erfindung anhand eines bevorzugten Ausführungsbeispiels näher erläutert.

Die Figur 1 zeigt eine schematische Darstellung einer Molybdänfolie und eines zylindrischen Molybdänstifts, die entsprechend des erfindungsgemäßen Schweißverfahrens durch vier Schweißpunkte miteinander verbunden sind.

Die Figuren 2 und 3 zeigen Lampen, bei denen die erfindungsgemäße Schweißverbindung angewendet wird.

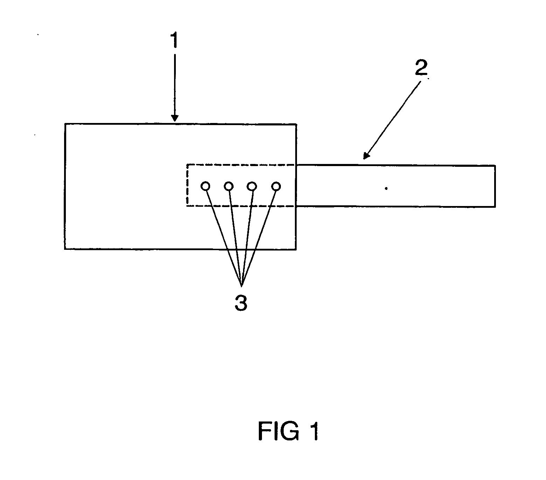

Die in Figur 1 abgebildete Molybdänfolie 1 besitzt eine Dicke von 27 µm. Der Molybdänstift 2 ist kreiszylindrisch ausgebildet und besitzt einen Durchmesser von 0,78 mm. Zum Verschweißen werden die Molybdänfolie 1 und der Molybdänstift 2 in einer Halterung eingespannt, so dass sie einander überlappend angeordnet sind und sich miteinander im Kontakt befinden. Die vier Schweißpunkte 3 werden mit Hilfe eines Neodym: Yttrium-Aluminium-Granat Lasers hergestellt, der Infrarotstrahlung einer Wellenlänge von 1064 nm erzeugt. Der Laser wird gepulst mit einer mittleren Leistung von 100 Watt und einer Impulsspitzenleistung von 8 Kilowatt betrieben. Die Dauer der Impulse beträgt vorzugsweise 0,5 ms. Der Durchmesser des Laserstrahls beträgt 0,1 mm. Die vier Schweißpunkte sind in einer Reihe in einem Abstand von 0,5 mm angeordnet. Zur Herstellung der vier Schweißpunkte 3 wird der Laser auf der von dem Molybdänstift 2 abgewandten Oberfläche der Molybdänfolie 1 jeweils auf einen Punkt der Kontaktfläche von Molybdänfolie 1 und Molybdänstift 2 gerichtet und das Material der Molybdänfolie 1 an diesem Punkt mittels der Laserimpulse geschmolzen. In der Figur ist der mit der Molybdänfolie 1 überlappende Abschnitt des Molybdänstiftes 2 daher gestrichelt dargestellt, da er in der schematischen Darstellung der Figur normalerweise durch die Molybdänfolie 1 verdeckt und nicht sichtbar wäre. Zur Herstellung der Schweißpunkte genügt jeweils ein Laserimpuls. Die Impulsleistung eines Laserimpulses beträgt vorzugsweise 750 Watt. Während des Schweißvorgangs wird die Molybdänfolie 1 mit Hilfe einer beweglichen Gasdüse, die an der Molybdänfolie 1 anliegt und aus der kontinuierlich ein Inertgas, beispielsweise Stickstoff, ausströmt, an den Molybdänstift 2 gedrückt. Gute Schweißergebnisse werden aber auch mit Laserimpulsen einer Impulsdauer von nur 0,3 ms und einer Impulsleistung von nur 500 Watt erzielt.

Die Erfindung beschränkt sich nicht auf das oben näher erläuterte Ausführungsbeispiel. Beispielsweise kann der Molybdänstift 2 im Kontaktbereich abgeflacht sein, um die Kontaktfläche mit der Molybdänfolie 1 zu vergrößern. Außerdem kann das Schweißverfahren auch auf Folien und zylindrische Stifte mit anderer Dicke sowie aus anderen Metallen angewandt werden. Insbesondere eignet sich das erfindungsgemäße Verfahren zum Verschweißen von Molybdänfolien mit zylindrischen Stiften aus Molybdän oder Wolfram sowie auch zum Verschweißen von Tantalfolien mit zylindrischen Stiften aus Molybdän oder Wolfram. Die Metallstifte müssen nicht unbedingt kreiszylindrisch ausgebildet sein, sondern können stattdessen auch den Querschnitt eines Vielecks, beispielsweise eines Rechtecks oder Quadrates, aufweisen. Anstelle des oben erwähnten Lasertyps kann zum Verschweißen auch jeder andere geeignete Lasertyp verwendet werden.

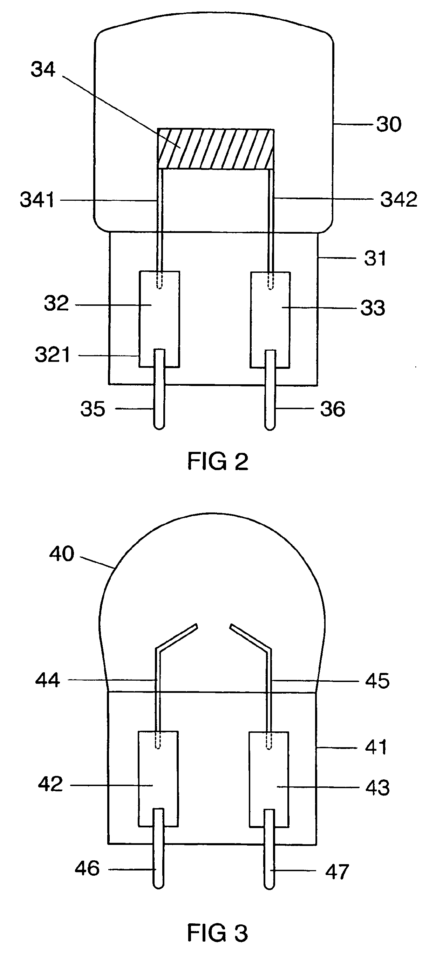

Die in Figur 2 dargestellte Glühlampe besitzt ein Lampengefäß 30 aus Quarzglas mit einem abgedichteten Ende 31, das zwei in dem abgedichteten Ende 31 eingebettete Molybdänfolien 32, 33 aufweist. Innerhalb des Lampengefäßes 30 ist eine Glühwendel 34 angeordnet, deren Wendelabgänge 341, 342 jeweils mit einer der Molybdänfolien 32 bzw. 33 durch mehrere Laserschweißpunkte verbunden sind, ähnlich wie in Figur 1 schematisch dargestellt. Das vom Innenraum des Lampengefäßes 30 abgewandte Ende 321 der Molybdänfolien 32, 33 ist jeweils mit einem aus dem abgedichteten Ende 31 des Lampengefäßes 30 herausgeführten Stromzuführungsdraht 35 bzw. 36 aus Molybdän durch vier Laserschweißpunkte verbunden, wie in Figur 1 schematisch dargestellt ist.

Die in Figur 3 dargestellte Entladungslampe besitzt ein Lampengefäß 40 aus Quarzglas mit einem abgedichteten Ende 41, das zwei in dem abgedichteten Ende 41 eingebettete Molybdänfolien 42, 43 aufweist. Innerhalb des Lampengefäßes 40 sind zwei Elektroden 44 angeordnet, die jeweils mit einer der Molybdänfolien 42 bzw. 43 durch mehrere Laserschweißpunkte verbunden sind, ähnlich wie in Figur 1 schematisch dargestellt. Das vom Innenraum des Lampengefäßes 40 abgewandte Ende der Molybdänfolien 42, 43 ist jeweils mit einem aus dem abgedichteten Ende 41 des Lampengefäßes 40 herausgeführten Stromzuführungsdraht 46 bzw. 47 aus Molybdän durch vier Laserschweißpunkte verbunden, wie in Figur 1 schematisch dargestellt ist.

## Patentansprüche

1. Verfahren zum Verschweißen einer Metallfolie (1) mit einem Metallstift (2), die zur Verwendung als Stromzuführungen in Lampen vorgesehen sind, wobei die Metallfolie (1) zur Ausführung des Schweißprozesses an den Metallstift (2) angedrückt wird, **dadurch gekennzeichnet, dass** der an dem Metallstift (2) anliegende Bereich der Metallfolie (1) mittels eines Lasers an mehreren Orten (3) punktuell erhitzt und geschmolzen wird, so dass nach dem Erkalten der Schmelze die Metallfolie (1) und der Metallstift (2) in der Umgebung dieser Orte (3) miteinander verbunden sind.

2. Verfahren nach Anspruch 1, **dadurch gekennzeichnet, dass** der Laser einen Strahldurchmesser von kleiner oder gleich 0,5 mm besitzt.

3. Verfahren nach Anspruch 1, **dadurch gekennzeichnet, dass** der Laser gepulst betrieben wird und die Impulsdauer eines Laserimpulses kleiner oder gleich 1,0 Millisekunden beträgt.

4. Verfahren nach Anspruch 1, **dadurch gekennzeichnet, dass** die Dicke der Metallfolie (1) kleiner oder gleich 150 µm beträgt.

5. Verfahren nach Anspruch 1, **dadurch gekennzeichnet, dass** der Metallstift abgeflacht ist und die abgeflachte Oberfläche des Metallstiftes zur Ausführung des Schweißprozesses mit der Metallfolie in Kontakt gebracht wird.

6. Verfahren nach Anspruch 1, **dadurch gekennzeichnet, dass** die Metallfolie (1) eine Molybdänfolie ist und der Metallstift (2) ein Molybdänstift oder ein Wolframstift ist.

7. Verfahren nach Anspruch 1 oder 6, **dadurch gekennzeichnet, dass** der Metallstift (2) als Abschnitt eines Stromzuführungsdrahtes, eines Glühfadens oder einer Gasentladungselektrode ausgebildet ist.

8. Lampe mit Stromdurchführungen durch ein verschlossenes Lampengefäß (30; 40), die mindestens eine Metallfolie (32; 42) und einen damit verbundenen Metallstift (341, 35; 44, 46) aufweisen, **dadurch gekennzeichnet, dass** die Metallfolie (32; 42) und der Metallstift (341, 35; 44, 46) durch mehrere Laserschweißpunkte miteinander verbunden sind.

9. Lampe nach Anspruch 8, **dadurch gekennzeichnet, dass** die Metallfolie als Molybdänfolie (32; 42) und der Metallstift als Wolfram- (341; 44) oder Molybdänstift (35; 46) ausgebildet ist.

10. Lampe nach Anspruch 8 oder 9, **dadurch gekennzeichnet, dass** der Metallstift als Abschnitt eines Stromzuführungsdrahtes (35; 46) oder einer Gasentladungselektrode (44) oder als Ende (341) eines Glühfadens (34) ausgebildet ist.

## Claims

1. Method for welding a metal foil (1) to a metal pin (2), these components being intended for use as supply conductors in lamps, the metal foil (1) being pressed onto the metal pin (2) in order for the welding process to be carried out, **characterized in that** the region of the metal foil (1) which adjoins the metal pin (2) is heated and melted in punctiform fashion at a plurality of locations (3) by means of a laser, so that after the molten material has cooled, the metal foil (1) and the metal pin (2) are joined to one another in the vicinity of these locations (3).

2. Method according to Claim 1, **characterized in that** the laser has a beam diameter of less than or equal to 0.5 mm.

3. Method according to Claim 1, **characterized in that** the laser is operated in pulsed mode and the pulse duration of a laser pulse is less than or equal to 1.0 millisecond.

4. Method according to Claim 1, **characterized in that** the thickness of the metal foil (1) is less than or equal to 150 µm.

5. Method according to Claim 1, **characterized in that** the metal pin is flattened, and the flattened surface of the metal pin is brought into contact with the metal foil in order for the welding process to be carried out.

6. Method according to Claim 1, **characterized in that** the metal foil (1) is a molybdenum foil, and the metal pin (2) is a molybdenum pin or a tungsten pin.

7. Method according to Claim 1 or 6, **characterized in that** the metal pin (2) is designed as part of a supply conductor wire, of an incandescent filament or of a gas discharge electrode.

8. Lamp with current leadthroughs passing through a closed lamp vessel (30; 40), these leadthroughs having at least one metal foil (32; 42) and a metal pin (341, 35; 44, 46) joined to it, **characterized in that** the metal foil (32; 42) and the metal pin (341, 35; 44, 46) are joined to one another by a plurality of laser-welded spots.

9. Lamp according to Claim 8, **characterized in that** the metal foil is in the form of a molybdenum foil (32; 42), and the metal pin is in the form of a tungsten pin (341; 44) or a molybdenum pin (35; 46).

10. Lamp according to Claim 8 or 9, **characterized in that** the metal pin is designed as part of a supply conductor wire (35; 46) or of a gas discharge electrode (44) or as the end (341) of an incandescent filament (34).

## Revendications

1. Procédé de soudage d'un ruban ( 1 ) métallique à une tige ( 2 ) métallique, qui sont destinés à être utilisés comme entrée de courant dans des lampes, le ruban ( 1 ) métallique étant, pour réaliser l'opération de soudage, appliqué avec pression sur la tige ( 2 ) métallique, **caractérisé en ce que** la partie du ruban ( 1 ) métallique s'appliquant à la tige ( 2 ) métallique est chauffée et fondue ponctuellement en plusieurs endroits ( 3 ) au moyen d'un laser, de sorte qu'après le refroidissement de la masse fondue, le ruban ( 1 ) métallique et la tige ( 2 ) métallique sont reliés l'un à l'autre au voisinage de ces emplacements.

2. Procédé suivant la revendication 1, **caractérisé en ce que** le laser a un diamètre du rayon inférieur ou égal à 0,5 mm.

3. Procédé suivant la revendication 1, **caractérisé en ce que** le laser fonctionne de manière pulsée et la durée d'une impulsion laser est inférieure ou égale à 1,0 milliseconde.

4. Procédé suivant la revendication 1, **caractérisé en ce que** l'épaisseur du ruban ( 1 ) métallique est inférieure ou égale à 150 µm.

5. Procédé suivant la revendication 1, **caractérisé en ce que** la tige métallique est aplatie et la surface aplatie de la tige métallique est mise en contact avec le ruban métallique pour réaliser le processus de soudage.

6. Procédé suivant la revendication 1, **caractérisé en ce que** le ruban ( 1 ) métallique est un ruban de molybdène et la tige ( 2 ) métallique est une tige de molybdène ou une tige de tungstène.

7. Procédé suivant la revendication 1 ou 6, **caractérisé en ce que** la tige ( 2 ) métallique est constituée en tronçons d'un fil d'entrée de courant, d'un filament incandescent ou d'une électrode de décharge dans un gaz.

8. Lampe ayant des traversées de courant passant à travers une enceinte ( 30 ; 40 ) de lampe fermée qui a au moins un ruban ( 32 ; 42 ) métallique et une tige ( 341, 35 ; 44, 46 ) métallique qui y est reliée, **caractérisée en ce que** le ruban ( 32 ; 42 ) métallique et la tige ( 341, 35 ; 44, 46 ) métallique sont reliés l'un à l'autre par plusieurs points de soudure laser.

9. Lampe suivant la revendication 8, **caractérisée en ce que** le ruban métallique est constitué sous la forme d'un ruban ( 32 ; 42 ) de molybdène et la tige métallique sous la forme d'une tige ( 341 ; 44 ) de tungstène ou d'une tige ( 35 ; 46 ) de molybdène.

10. Lampe suivant la revendication 8 ou 9, **caractérisée en ce que** la tige métallique est constituée sous la forme d'un tronçon d'un fil ( 35 ; 46 ) d'entrée de courant ou d'une électrode ( 44 ) de décharge dans un gaz ou sous la forme d'une extrémité ( 341 ) d'un filament ( 34 ) incandescent.
